# EUROPEAN PATENT SPECIFICATION

(11) **EP 4 197 739 B1**
(45) Date of publication and mention of the grant of the patent: **17.01.2024**
(21) Application number: 22192887.2
(22) Date of filing: 30.08.2022
(51) Int. Cl.: B29C 49/42, B29C 49/64, B29C 49/68, B29C 49/06

(54) **APPARATUS AND METHOD FOR HEATING PARISONS**
VORRICHTUNG UND VERFAHREN ZUR ERHITZUNG VON VORFORMLINGEN
APPAREIL ET MÉTHODE DE CHAUFFAGE DE PRÉFORMES

(30) Priority: 14.12.2021 IT 202100031367
(43) Date of publication of application: 21.06.2023
(73) Proprietor: Gea Procomac S.p.A., 43038 Sala Baganza (PR) (IT)
(72) Inventor: DE LUCA, Carlo, 31029 VITTORIO VENETO (TV) (IT)
(74) Representative: Dondi, Silvia

(56) References cited:
- DE-U1- 29 817 897
- DE-U1-202013 012 870
- US-A- 5 876 768
- US-A1- 2019 134 878

## Description

The present invention relates to an apparatus and a method for heating parisons, in particular in thermoplastic material.

The parison heating oven is a fundamental unit in a production plant for stretch-blowing containers in thermoplastic material.

Usually, the heating oven comprises a transport chain for the parisons, along which lamps are arranged, for example infrared or NIR, or laser systems for irradiating the tubular body of the parisons during their advancement.

Some solutions include lamps arranged outside the transport chain, others include lamps interposed between two parallel straight branches of the transport chain.

During advancement, each parison usually rotates about its longitudinal axis so as to expose different surfaces of its tubular body to the irradiation. A part of the radiation emitted is not absorbed by the parisons, but heats the environment, thus reducing the overall efficiency of the oven.

A parison heating apparatus is known from utility model DE 202013012870 U, which is based on the use of a rotating carousel with two distinct and concentric paths: an internal path and an external path.

The heating elements, which emit infrared radiation, are arranged circumferentially outside both advancement paths of the parisons. Thus, such heating elements are closer, in the radial direction, to the external path and farther away from the internal path.

Each parison enters the rotating carousel and first follows the internal path, receiving a first dose of irradiation from the heating elements.

Upon completion of the internal path, the parison is transferred to the external path, whereby it is subjected to a greater irradiation, given the shorter distance of the heating elements.

At the end of the external path, the parison exits the rotating carousel and is transferred to the next unit.

The parisons are supported in pairs by gripping devices so that one parison of the pair moves on the external path and the other on the internal path. Thereby, part of the radiation not absorbed by the parisons moving on the external path is recovered by the parisons moving on the internal path, thus increasing the heating efficiency.

However, even the solution proposed in DE 202013012870 U does not solve the problem of treatment uniformity. In fact, as mentioned above, the parisons receive different doses of irradiation as a function of their distance from the heating elements.

In this context, the technical task underpinning the present invention is to provide an apparatus and a method for heating parisons, in particular in thermoplastic material, which obviates the drawbacks of the prior art mentioned above.

In particular, it is an object of the present invention to propose an apparatus and a method for heating parisons, in particular in thermoplastic material, which achieve a more uniform heating of the parisons with respect to the solutions already known.

Another object of the present invention is to propose an apparatus and a method for heating parisons, in particular in thermoplastic material, which further improve the heating efficiency and thus allow to reduce overall dimensions.

The defined technical task and the specified aims are substantially achieved by an apparatus for heating parisons, in particular in thermoplastic material, comprising:
- at least a first path and a second path for advancing the parisons, which are distinct and having a partially curvilinear shape, the first path being internal and substantially parallel to the second path;
- gripping members of the parisons configured to grasp and support the parisons during their advancement along the first path and second path;
- transfer devices of the parisons from the first path to the second path;
- heating means of the parisons, which extends at least along a section interposed between the first path and the second path for advancing the parisons.

In accordance with an aspect of the invention, the first path and the second path are concentric.

In accordance with an embodiment, the heating means is configured to irradiate the parisons.

In accordance with an embodiment, the heating means comprises a plurality of lamps organised in adjacent modules.

For example, the lamps are infrared or NIR.

In accordance with an aspect of the invention, each transfer device of the parisons comprises:
- a common support for a pair of gripping members of the parisons which are constrained to the common support on opposite parts such that a first gripping member of the pair is at the first advancement path and a second gripping member of the pair is at the second advancement path of the parisons;
- actuating means configured to rotate said common support so as to exchange the position of the gripping members of the pair so that the first gripping member gets to the second path and the second gripping member gets to the first advancement path of the parisons.

In accordance with an embodiment, the first path and the second path each comprise at least two straight sections parallel to each other and a curvilinear section connecting the two straight sections.

The straight sections of the first path are parallel to the straight sections of the second path and the curvilinear section of the first path is parallel to the curvilinear section of the second path.

In accordance with an aspect of the invention, the heating means is interposed between one of the straight sections of the first path and one of the straight sections of the second path.

In accordance with an aspect of the invention, the heating means is interposed between the curvilinear section of the first path and the curvilinear section of the second path.

In accordance with an embodiment, the first path is an arc of a first circumference and the second path is an arc of a second circumference having a diameter greater than the first circumference and being external and concentric to the first circumference.

Preferably, the heating means is interposed between the arc of the first circumference and the arc of the second circumference.

In accordance with an aspect of the invention, the gripping members of the parisons are also configured to rotate the parisons about a longitudinal axis thereof during their advancement along the first path and along the second path.

In accordance with an embodiment, the apparatus comprises further advancement paths of the parisons, which have an external extension with respect to the second path and are concentric and substantially parallel to each other.

The defined technical task and the specified aims are substantially achieved by a method for heating parisons, in particular in thermoplastic material, comprising the following steps:
- advancing a first group of parisons, one after the other, along a first path having a partially curvilinear shape and, during at least one section of such advancement, heating the parisons of the first group by heating means extending outside the first path;
- at the end of the first path, transferring the parisons of the first group, one after the other, from the first path to a second path that is outside and substantially parallel to the first path, the second path having a partially curvilinear shape and also being outside the heating means;
- advancing the parisons of the first group, one after the other, along the second path and, during at least one section of such advancement, heating the parisons of the first group by the heating means.

In particular, while the parisons of the first group advance along the second path, a second group of parisons is loaded onto the first path so that the first group of parisons and the second group of parisons advance parallel on the second path and the first path, respectively, and are heated by opposite parts of the heating means.

In accordance with an aspect of the method, the parisons are grasped and supported by a plurality of gripping means which are constrained in pairs to common supports such that a first gripping member of the pair is at the first advancement path and a second gripping member of the pair is at the second advancement path of the parisons.

The step of transferring the parisons of the first group from the first path to the second path consists in rotating the common supports so as to exchange the position of the gripping members of the pair so that the first gripping member carrying a parison of the first group gets to the second path and the second gripping member gets to the first advancement path of the parisons in order to accommodate a parison of the second group.

In accordance with an aspect of the method, during the advancement along the first path and along the second path, the parisons are rotated about a longitudinal axis thereof.

Further features and advantages of the present invention will more fully emerge from the non-limiting description of a preferred but not exclusive embodiment of an apparatus and a method for heating parisons, in particular in thermoplastic material, as illustrated in the accompanying drawings, in which:
- figure 1 shows a parison in thermoplastic material;
- figure 2 schematically shows a first embodiment of an apparatus for heating parisons, in particular in thermoplastic material, in accordance with the present invention;
- figure 3 schematically shows a second embodiment of the apparatus of figure 2;
- figure 4 shows a transfer device of the parisons used in the apparatus of figure 2 or 3;
- figure 5 shows heating means for the apparatus according to the present invention.

With reference to the figures, the number 1 indicates an apparatus for heating parisons 100, in particular in thermoplastic material.

In this context, each parison 100 comprises a tubular body 100a and a neck 100b (usually threaded) not subject to processing.

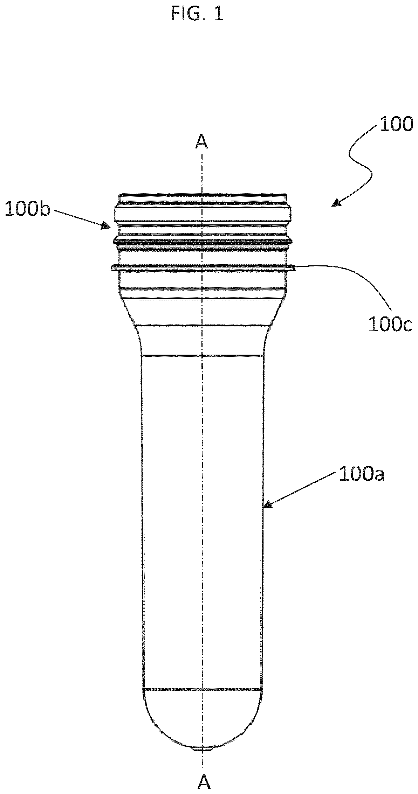

The neck 100b has an annular protrusion, indicated with the reference 100c, known in the field with the term "bague". Such a parison is illustrated in figure 1.

The apparatus 1 comprises at least two advancement paths 2, 3 of the parisons 100, which are distinct and extend one inside the other.

The two paths are:
- a first path 2 having a partially curvilinear shape;
- a second path 3 having a partially curvilinear shape.

The first path 2 is substantially parallel to the second path 3 and extends therein.

Preferably, the first path 2 and the second path 3 are concentric.

In particular, the second path 3 extends about the first path 2 and at a predefined distance, indicated with the letter "d", from the first path 2.

During their advancement along the first path 2 and along the second path 3, the parisons 100 are grasped and supported by gripping members 4a, 4b.

Preferably, the gripping members 4a, 4b are also configured to rotate the parisons 100 about a longitudinal axis A-A thereof during their advancement along the first path 2 and along the second path 3.

The apparatus 1 further comprises a plurality of transfer devices 5 operatively active on the parisons 100 to carry them from the first path 2 to the second path 3.

Preferably, the transfer devices 5 are operatively active on the parisons 100 also to carry them from the second path 3 to the first path 2, as will be better seen below.

In particular, after completing the first path 2, each parison 100 is transferred to the second path 3 by a corresponding transfer device 5.

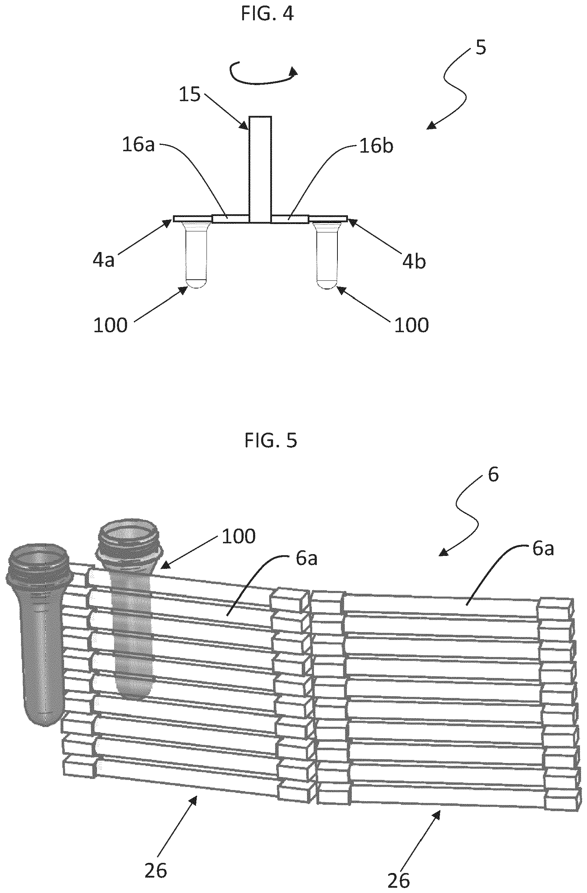

In accordance with an embodiment, shown in figure 4, each transfer device 5 comprises a common support 15 for a pair of gripping members 4a, 4b of the parisons 100 and actuating means (not illustrated) configured to rotate the common support 15.

The actuating means is of known type, for example mechanical or electrical.

The gripping members associated with the transfer device 5 are hereinafter referred to as: a first gripping member 4a and a second gripping member 4b.

The first gripping member 4a and the second gripping member 4b are integrally constrained to the common support 15 on opposite sides so as to be at one or the other of the two advancement paths 2, 3 of the parisons 100.

In particular, the common support 15 comprises a central shaft having an extension substantially orthogonal to the advancement trajectories of the parisons 100 and two arms 16a, 16b having extension from the central shaft in diametrically opposite directions. Each of the two arms 16a, 16b supports one of the gripping members 4a, 4b of the pair associated with the transfer device 5, as shown in figure 4.

For example, in a step of the heating method, the first gripping member 4a is at the first advancement path 2 and the second gripping member 4b is at the second advancement path 3.

The actuating means is configured to rotate the common support 15 so as to exchange (i.e., invert) the position of the gripping members 4a, 4b of the pair so that the first gripping member 4a gets to the second path 3 and the second gripping member 4b gets to the first advancement path 2 of the parisons 100.

Thereby, after completing the first advancement path 2 (the internal path), each parison 100 is transferred to the second advancement path 3 (the external path), always being supported by the same gripping member.

For example, each gripping member 4a, 4b consists of a pad or a gripper operatively active to grasp the parisons 100 below the bague 100c. Alternatively, each gripping member 4a, 4b consists of a support compartment of the parisons 100 below the bague 100c.

The apparatus 1 comprises heating means 6 of the parisons 100, which advantageously extends at least along a section interposed between the first path 2 and the second path 3 for advancing the parisons 100.

In accordance with a preferred embodiment, the heating means 6 is configured to irradiate the parisons 100.

For example, the heating means 6 comprises a plurality of infrared or NIR lamps, or laser systems.

Alternatively, the heating means 6 is configured to heat the parisons 100 by forced hot air convection.

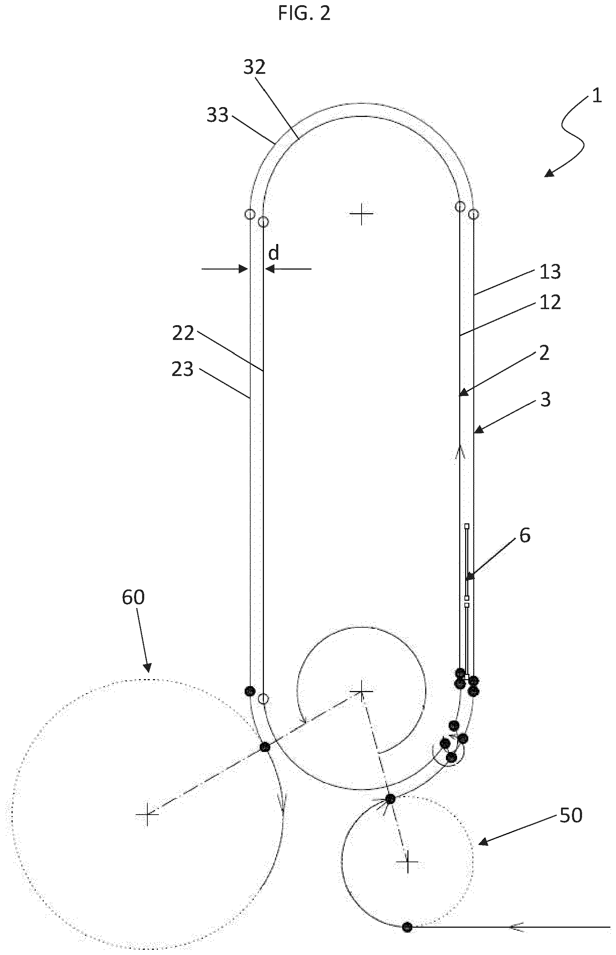

In accordance with an embodiment, shown in figure 2, the first path 2 and the second path 3 each comprise at least two straight sections 12, 22, 13, 23 parallel to each other and a curvilinear section 32, 33 connecting the two straight sections 12, 22, 13, 23.

The straight sections 12, 22 of the first path 2 are parallel to the straight sections 13, 23 of the second path 3 and the curvilinear section 32 of the first path 2 is parallel to the curvilinear section 33 of the second path 3.

In accordance with an aspect of the invention, the heating means 6 is interposed between one of the straight sections 12, 22 of the first path 2 and one of the straight sections 13, 23 of the second path 3.

In accordance with an aspect of the invention, the heating means 6 is interposed between the curvilinear section 32 of the first path 2 and the curvilinear section 33 of the second path 3.

In accordance with an aspect of the invention, the heating means 6 is interposed in different sections between the first path 2 and the second path 3 for advancing the parisons 100.

Such heating means 6 can extend discretely in distinct sections between the first path 2 and the second path 3 or continuously along the entire extension of the two paths 2, 3.

In particular, the first path 2 comprises at least a first straight section 12, a second straight section 22 (parallel to each other) and a third curvilinear section 32 connecting the first straight section 12 and the second straight section 22.

Similarly, the second path 3 comprises at least a fourth straight section 13, a fifth straight section 23 (parallel to each other) and a sixth curvilinear section 33 connecting the fourth straight section 13 and the fifth straight section 23.

The fourth straight section 13 is parallel and external to the first straight section 12.

For example, the heating means 6 can be interposed between the first straight section 12 and the fourth straight section 13, as shown in figure 2. The fifth straight section 23 is parallel and external to the second straight section 22.

For example, the heating means 6 can be interposed between the second straight section 22 and the fifth straight section 23.

The sixth curvilinear section 33 is parallel and external to the third curvilinear section 32.

For example, the heating means 6 can be interposed between the third curvilinear section 32 and the sixth curvilinear section 33.

In accordance with an aspect of the invention, the heating means 6 comprises a plurality of lamps 6a organised in modules 26 comprising a number n of lamps 6a.

For example, figure 5 shows two modules 26, each of which comprises a number of lamps 6a equal to ten.

In each module 26, the lamps 6a are arranged parallel to each other, preferably equally spaced.

Preferably, each lamp 6a has an elongated extension along a main direction, in particular substantially horizontal.

If the heating means 6 is interposed between straight sections, the modules 26 are arranged adjacent to each other and, in plan, substantially extend in a straight line.

If the heating means 6 is interposed between curvilinear sections, the modules 26 are arranged adjacent to each other and, in plan, extend along a polyline.

Preferably, the distance between the first straight section 12 and the fourth straight section 13 is equal to the distance between the second straight section 22 and the fifth straight section 23 and the distance between the third curvilinear section 32 and the sixth curvilinear section 33, and is equal to the predetermined distance between the two paths 2, 3 indicated above with "d".

The distance d has a size such as to allow to house the heating means 6. In this embodiment, the apparatus 1 comprises a transport chain (not shown) to which the transfer devices 5 are constrained, thus also the gripping members 4a, 4b of the parisons 100.

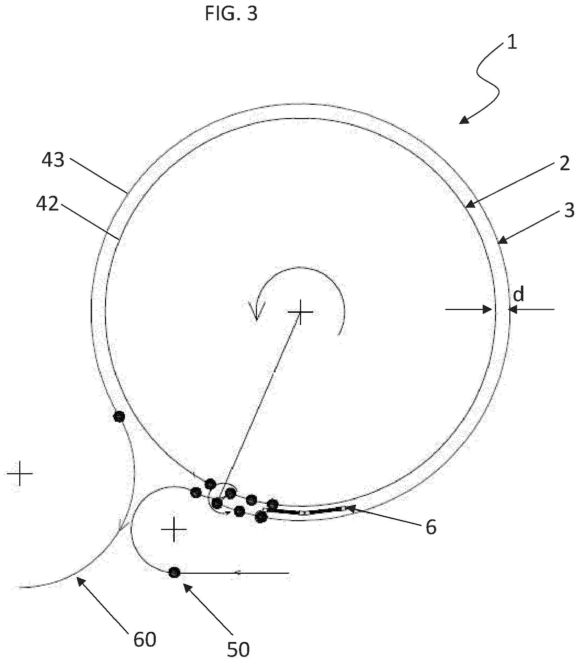

In accordance with an embodiment, shown in figure 3, the first path 2 is an arc of a first circumference 42 and the second path 3 is an arc of a second circumference 43.

The second circumference 43 has a diameter greater than the first circumference 42 and is external and concentric to the first circumference 42.

In accordance with an aspect of the invention, the heating means 6 is interposed between the two arc paths 2, 3 of the first circumference 42 and the second circumference 43.

In figure 3, the heating means 6 is interposed between the arc of the first circumference 42 and the arc of the second circumference 43 for an initial section. Alternatively, the heating means 6 can be located in other sections between the two arcs or can extend for the entire extension of the arcs.

The radial distance between the first circumference 42 and the second circumference 43 is equal to the predetermined distance between the two paths 2, 3 indicated above with "d".

The distance d has a size such as to allow to house the heating means 6. In this case, given the arcuate shape of the gap between the two paths 2, 3, the modules 26 of the lamps 6a are arranged adjacent to each other and, in plan, extend along a polyline.

In the embodiment of figure 3, the apparatus 1 comprises a rotating carousel on which the transfer devices 5 are installed, therefore also the gripping members 4a, 4b of the parisons 100.

In accordance with a variant of the invention, not shown, the apparatus 1 comprises more than two advancement paths of the parisons 100. In particular, the further advancement paths (in addition to the first and the second path 2, 3) extend outside the second path 3; preferably they are further parallel and concentric paths.

The method for heating parisons, in particular in thermoplastic material, according to the present invention, is described below.

The method comprises the following steps:
- advancing a first group of parisons 100, one after the other, along the first (internal) path 2 and, during at least one section of such advancement, heating the parisons 100 of the first group by the heating means 6 located outside the first path 2;
- at the end of the first path 2, transferring the parisons 100 of the first group, one after the other, from the first path 2 to the second path 3 which is outside and substantially parallel to the first path 2;
- advancing the parisons 100 of the first group, one after the other, along the second path 3 and, during at least one section of such advancement, heating the parisons 100 by the heating means 6.

In accordance with an aspect of the invention, while the parisons 100 of the first group advance along the second path 3, a second group of parisons 100 is loaded onto the first path 2.

Thereby, the first group of parisons 100 and the second group of parisons 100 advance parallel on the second path 3 and the first path 2, respectively, and are heated on opposite parts by the heating means 6.

In fact, the first group of parisons 100 advancing on the second path 3 receives heat from the external side while the second group of parisons 100 advancing on the first path 2 receives heat from the internal side. Preferably, the method is actuated by means of the apparatus 1 described above.

The method is detailed below in relation to only one transfer device 5 for reasons of expository clarity.

At the beginning, the parisons 100 are fed to the apparatus 1, in particular they are loaded by a first star-wheel 50 placed upstream of the apparatus 1.

Such a first star-wheel 50 delivers a first parison 100 to one of the transfer devices 5, in particular to its first gripping member 4a.

The common support 15 is then rotated so that the first gripping member 4a (with the first parison 100) is arranged at the first path 2. The second gripping member 4b is, however, initially empty. Such a second gripping member 4b is arranged at the second path 3.

The first parison 100 advances along the first path 2 until it substantially returns to the starting point. Here, the second gripping member 4b, which is empty, can accommodate a second parison 100 coming from the first star-wheel 50.

The common support 15 is rotated again so that the first gripping member 4a reverses its position with the second gripping member 4b.

Therefore, the first parison 100 (supported by the first gripping member 4a) is transferred to the second path 3 while the second parison 100 (supported by the second gripping member 4b) is at the first path 2.

At this point, the first parison 100 advances along the second path 3 (external) while the second parison 100 advances along the first path 2 (internal).

The advancement of the first parison 100 along the second path 3 ends at a second star-wheel 60 placed downstream of the apparatus 1. Such a second star-wheel 60 receives the parisons 100 directly from the second path 3, i.e., after they have completed two turns (the internal and the external one).

The first parison 100 is then unloaded in the second star-wheel 60, while the transfer device 5 continues until it returns to the starting point, near the first star-wheel 50. Here, the first gripping member 4a, emptied of the first parison 100, is ready to accommodate a new parison 100. The second parison 100, supported by the second gripping member 4b, which has completed the first path 2, is instead about to be transferred to the second path 3.

During the advancement along the first path 2 and along the second path 3, the parisons 100 are rotated about a longitudinal axis A-A thereof.

When fully operational, it is clear that the various transfer devices 5 carry two parisons 100, one on the internal path 2 and one on the external path 3. In fact, the new parisons 100 to be heated are continuously loaded by the first star-wheel 50 and, after having completed two turns, are unloaded by the second star-wheel 60.

The features of an apparatus and a method for heating parisons, in particular in thermoplastic material, according to the present invention, are clear from the description, as are the advantages.

In particular, the arrangement of heating means between the two advancement paths of the parisons allows each parison to be subjected to the same dose of heat at least twice - a first time during the internal path, a second time during the external path.

Conversely, in the solution shown in DE 202013012870 U, the parisons received a lower dose of irradiation during the internal path and a higher dose of irradiation during the external path.

Furthermore, by rotating the parisons about the longitudinal axis thereof both during the first path and during the second path, the entire external surface of their tubular body is subjected to heating.

By virtue of the apparatus and method proposed here, a higher heating efficiency is thus obtained.

Furthermore, the proposed apparatus is more compact and less expensive with respect to the known solutions.

## Claims

1. An apparatus (1) for heating parisons (100), in particular in thermoplastic material, said apparatus (1) comprising:
- at least a first path (2) and a second path (3) for advancing the parisons (100) which are distinct and having a partially curvilinear shape, said first path (2) being internal and substantially parallel to said second path (3);
- gripping members (4a, 4b) of the parisons (100) configured to grasp and support the parisons (100) during their advancement along the first path (2) and second path (3);
- transfer devices (5) of the parisons (100) from the first path (2) to the second path (3);
- heating means (6) of the parisons (100), extending at least along a section interposed between the first path (2) and the second path (3) for advancing the parisons (100).

2. The apparatus (1) according to claim 1, wherein said first path (2) and said second path (3) are concentric.

3. The apparatus (1) according to claim 1 or 2, wherein said heating means (6) is configured to irradiate the parisons (100).

4. The apparatus (1) according to any one of the preceding claims, wherein said heating means (6) comprises a plurality of lamps (6a) organised in adjacent modules (26).

5. The apparatus (1) according to claim 4, wherein the lamps (6a) are infrared or NIR.

6. The apparatus (1) according to any one of the preceding claims, wherein each transfer device (5) of the parisons (100) comprises:
- a common support (15) for a pair of gripping members (4a, 4b) of the parisons (100) which are constrained to the common support (15) on opposite parts such that a first gripping member (4a) of the pair is at the first advancement path (2) and a second gripping member (4b) of the pair is at the second advancement path (3) of the parisons (100);
- actuating means configured to rotate said common support (15) so as to exchange the position of the gripping members (4a, 4b) of the pair so that the first gripping member (4a) gets to the second path (3) and the second gripping member (4b) gets to the first advancement path (2) of the parisons (100).

7. The apparatus (1) according to any one of the preceding claims, wherein said first path (2) and said second path (3) each comprise at least two straight sections (12, 22, 13, 23) parallel to each other and a curvilinear section (32, 33) connecting the two straight sections (12, 22, 13, 23), the straight sections (12, 22) of the first path (2) being parallel to the straight sections (13, 23) of the second path (3) and the curvilinear section (32) of the first path (2) being parallel to the curvilinear section (33) of the second path (3).

8. The apparatus (1) according to claim 7, wherein said heating means (6) is interposed between one of the straight sections (12, 22) of the first path (2) and one of the straight sections (13, 23) of the second path (3).

9. The apparatus (1) according to claim 7, wherein said heating means (6) is interposed between the curvilinear section (32) of the first path (2) and the curvilinear section (33) of the second path (3).

10. The apparatus (1) according to any one of the preceding claims 1 to 6, wherein said first path (2) is an arc of a first circumference (42) and said second path (3) is an arc of a second circumference (43) having a diameter greater than the first circumference (42) and being external and concentric to said first circumference (42).

11. The apparatus (1) according to claim 10, wherein said heating means (6) is interposed between the arc of the first circumference (42) and the arc of the second circumference (43).

12. The apparatus (1) according to any one of the preceding claims, wherein said gripping members (4a, 4b) of the parisons (100) are further configured to rotate the parisons (100) about a longitudinal axis (A-A) thereof during their advancement along the first path (2) and along the second path (3).

13. The apparatus (1) according to any one of the preceding claims, further comprising further advancement paths of the parisons (100) having external extension with respect to the second path (3) and being concentric and substantially parallel to each other.

14. A method for heating parisons (100), in particular in thermoplastic material, comprising the following steps:
- advancing a first group of parisons (100), one after the other, along a first path (2) having a partially curvilinear shape and, during at least one section of such advancement, heating the parisons (100) of the first group by heating means (6) extending outside said first path (2);
- at the end of the first path (2), transferring the parisons (100) of the first group, one after the other, from the first path (2) to a second path (3) that is outside and substantially parallel to the first path (2), said second path (3) having a partially curvilinear shape and also being outside said heating means (6);
- advancing the parisons (100) of the first group, one after the other, along the second path (3) and, during at least one section of such advancement, heating the parisons (100) of the first group by the heating means (6).

15. The method according to claim 14, wherein while the parisons (100) of the first group advance along the second path (3), a second group of parisons (100) is loaded onto the first path (2) so that the first group of parisons (100) and the second group of parisons (100) advance parallel on the second path (3) and the first path (2), respectively, and are heated on opposite parts by the heating means (6).

16. The method according to claim 15, wherein said parisons (100) are grasped and supported by a plurality of gripping members (4a, 4b) which are constrained in pairs to common supports (15) so that a first gripping member (4a) of the pair is at the first advancement path (2) and a second gripping member (4b) of the pair is at the second advancement path (3) of the parisons (100), the step of transferring the parisons (100) of the first group from the first path (2) to the second path (3) consisting in rotating the common supports (15) so as to exchange the position of the gripping members (4a, 4b) of the pair for which the first gripping member (4a) carrying a parison (100) of the first group gets to the second path (3) and the second gripping member (4b) gets to the first advancement path (2) of the parisons (100) in order to accommodate a parison (100) of the second group.

17. The method according to any one of claims 14 to 16, wherein during the advancement along the first path (2) and along the second path (3) the parisons (100) are rotated about a longitudinal axis (A-A) thereof.

## Patentansprüche

1. Vorrichtung (1) zur Erhitzung von Vorformlingen (100), insbesondere aus thermoplastischem Material, wobei die Vorrichtung (1) umfasst:
- mindestens einen ersten Weg (2) und einen zweiten Weg (3) zum Vorschieben der Vorformlinge (100), die unterschiedlich sind und eine teilweise gekrümmte Form aufweisen, wobei der erste Weg (2) intern und im Wesentlichen parallel zum zweiten Weg (3) ist;
- Greifelemente (4a, 4b) der Vorformlinge (100), die ausgelegt sind, um die Vorformlinge (100) während ihres Vorschubs entlang des ersten Weges (2) und des zweiten Weges (3) zu greifen und abzustützen;
- Transfereinrichtungen (5) der Vorformlinge (100) vom ersten Weg (2) zum zweiten Weg (3);
- Heizmittel (6) der Vorformlinge (100),
sich erstreckend zumindest entlang eines Teilstücks, das zwischen dem ersten Weg (2) und dem zweiten Weg (3) zum Vorschieben der Vorformlinge (100) angeordnet ist.

2. Vorrichtung (1) nach Anspruch 1, wobei der erste Weg (2) und der zweite Weg (3) konzentrisch sind.

3. Vorrichtung (1) nach Anspruch 1 oder 2, wobei die Heizmittel (6) ausgelegt sind, um die Vorformlinge (100) zu bestrahlen.

4. Vorrichtung (1) nach einem der vorhergehenden Ansprüche, wobei die Heizmittel (6) eine Vielzahl von Lampen (6a) umfassen, die in benachbarten Modulen (26) angeordnet sind.

5. Vorrichtung (1) nach Anspruch 4, wobei die Lampen (6a) Infrarot oder NIR sind.

6. Vorrichtung (1) nach einem der vorhergehenden Ansprüche, wobei jede Transfereinrichtung (5) der Vorformlinge (100) Folgendes umfasst:
- eine gemeinsame Stütze (15) für ein Paar von Greifelementen (4a, 4b) der Vorformlinge (100), die an gegenüberliegenden Teilen an die gemeinsame Stütze (15) festgespannt sind, so dass sich ein erstes Greifelement (4a) des Paares am ersten Vorschubweg (2) und ein zweites Greifelement (4b) des Paares am zweiten Vorschubweg (3) der Vorformlinge (100) befindet;
- Betätigungsmittel, die dazu ausgelegt sind, die gemeinsame Stütze (15) zu drehen, um die Position der Greifelemente (4a, 4b) des Paares auszutauschen, so dass das erste Greifelement (4a) in den zweiten Weg (3) gelangt und das zweite Greifelement (4b) in den ersten Vorschubweg (2) der Vorformlinge (100) gelangt.

7. Vorrichtung (1) nach einem der vorhergehenden Ansprüche, wobei der erste Weg (2) und der zweite Weg (3) jeweils mindestens zwei gerade Teilstücke (12, 22, 13, 23), die parallel zueinander sind, und ein gekrümmtes Teilstück (32, 33), das die zwei geraden Teilstücke (12, 22, 13, 23) verbindet, umfassen, wobei die geraden Teilstücke (12, 22) des ersten Weges (2) parallel zu den geraden Teilstücken (13, 23) des zweiten Weges (3) sind und das gekrümmte Teilstück (32) des ersten Weges (2) parallel zum gekrümmten Teilstück (33) des zweiten Weges (3) ist.

8. Vorrichtung (1) nach Anspruch 7, wobei die Heizmittel (6) zwischen einem der geraden Teilstücke (12, 22) des ersten Weges (2) und einem der geraden Teilstücke (13, 23) des zweiten Weges (3) angeordnet sind.

9. Vorrichtung (1) nach Anspruch 7, wobei die Heizmittel (6) zwischen dem gekrümmten Teilstück (32) des ersten Weges (2) und dem gekrümmten Teilstück (33) des zweiten Weges (3) angeordnet sind.

10. Vorrichtung (1) nach einem der vorhergehenden Ansprüche 1 bis 6, wobei der erste Weg (2) ein Bogen eines ersten Umfangs (42) ist und der zweite Weg (3) ein Bogen eines zweiten Umfangs (43) ist, der einen Durchmesser aufweist, der größer als der erste Umfang (42) ist und extern und konzentrisch zum ersten Umfang (42) ist.

11. Vorrichtung (1) nach Anspruch 10, wobei die Heizmittel (6) zwischen dem Bogen des ersten Umfangs (42) und dem Bogen des zweiten Umfangs (43) angeordnet sind.

12. Vorrichtung (1) nach einem der vorhergehenden Ansprüche, wobei die Greifelemente (4a, 4b) der Vorformlinge (100) ferner dazu ausgelegt sind, die Vorformlinge (100) während ihres Vorschubs entlang des ersten Weges (2) und entlang des zweiten Weges (3) um eine Längsachse (A-A) davon zu drehen.

13. Vorrichtung (1) nach einem der vorhergehenden Ansprüche, ferner umfassend weitere Vorschubwege der Vorformlinge (100), die eine äußere Erstreckung in Bezug auf den zweiten Weg (3) aufweisen und konzentrisch und im Wesentlichen parallel zueinander sind.

14. Verfahren zur Erhitzung von Vorformlingen (100), insbesondere aus thermoplastischem Material, umfassend die folgenden Schritte:
- Vorschieben einer ersten Gruppe von Vorformlingen (100) nacheinander entlang eines ersten Weges (2), der eine teilweise gekrümmte Form aufweist, und während mindestens eines Teilstücks dieses Vorschubs Erhitzen der Vorformlinge (100) der ersten Gruppe durch Heizmittel (6), die sich außerhalb des ersten Weges (2) erstrecken;
- am Ende des ersten Weges (2), Transferieren der Vorformlinge (100) der ersten Gruppe nacheinander vom ersten Weg (2) zu einem zweiten Weg (3), der sich außerhalb und im Wesentlichen parallel zum ersten Weg (2) befindet, wobei der zweite Weg (3) eine teilweise gekrümmte Form aufweist und sich auch außerhalb der Heizmittel (6) befindet;
- Vorschieben der Vorformlinge (100) der ersten Gruppe nacheinander entlang des zweiten Weges (3) und während zumindest eines Teilstücks dieses Vorschubs Erhitzen der Vorformlinge (100) der ersten Gruppe durch die Heizmittel (6).

15. Verfahren nach Anspruch 14, wobei, während die Vorformlinge (100) der ersten Gruppe entlang des zweiten Weges (3) vorgeschoben werden, eine zweite Gruppe von Vorformlingen (100) auf den ersten Weg (2) geladen wird, so dass die erste Gruppe von Vorformlingen (100) und die zweite Gruppe von Vorformlingen (100) jeweils parallel auf dem zweiten Weg (3) und dem ersten Weg (2) vorgeschoben werden und an gegenüberliegenden Teilen durch die Heizmittel (6) erhitzt werden.

16. Verfahren nach Anspruch 15, wobei die Vorformlinge (100) von einer Vielzahl von Greifelementen (4a, 4b) gegriffen und abgestützt werden, die paarweise an gemeinsame Stützen (15) festgespannt werden, so dass sich ein erstes Greifelement (4a) des Paares am ersten Vorschubweg (2) befindet und sich ein zweites Greifelement (4b) des Paares am zweiten Vorschubweg (3) der Vorformlinge (100) befindet, wobei der Schritt zum Transferieren der Vorformlinge (100) der ersten Gruppe vom ersten Weg (2) zum zweiten Weg (3) darin besteht, die gemeinsamen Stützen (15) zu drehen, um die Position der Greifelemente (4a, 4b) des Paares auszutauschen, weswegen das erste Greifelement (4a), das einen Vorformling (100) der ersten Gruppe trägt, zum zweiten Weg (3) gelangt und das zweite Greifelement (4b) zum ersten Vorschubweg (2) der Vorformlinge (100) gelangt, um einen Vorformling (100) der zweiten Gruppe aufzunehmen.

17. Verfahren nach einem der Ansprüche 14 bis 16, wobei während des Vorschubs entlang des ersten Weges (2) und entlang des zweiten Weges (3) die Vorformlinge (100) um eine Längsachse (A-A) davon gedreht werden.

## Revendications

1. Appareil (1) de chauffage de préformes (100), en particulier en matière thermoplastique, ledit appareil (1) comprenant :
- au moins un premier parcours (2) et un deuxième parcours (3) d'avancement des préformes (100) étant distinctes et de forme partiellement curviligne, ledit premier parcours (2) étant interne et essentiellement parallèle audit deuxième parcours (3) ;
- des organes de préhension (4a, 4b) des préformes (100) configurés pour saisir et supporter les préformes (100) pendant leur avancement le long du premier parcours (2) et du deuxième parcours (3) ;
- des dispositifs de transfert (5) des préformes (100) du premier parcours (2) au deuxième parcours (3) ;
- des moyens de chauffage (6) des préformes (100),
se prolongeant au moins le long d'une section interposée entre le premier parcours (2) et le deuxième parcours (3) pour l'avancement des préformes (100).

2. Appareil (1) selon la revendication 1, dans lequel ledit premier parcours (2) et ledit deuxième parcours (3) sont concentriques.

3. Appareil (1) selon la revendication 1 ou 2, dans lequel lesdits moyens de chauffage (6) sont configurés pour irradier les préformes (100).

4. Appareil (1) selon l'une quelconque des revendications précédentes, dans lequel lesdits moyens de chauffage (6) comprennent une pluralité de lampes (6a) organisées en modules (26) adjacents.

5. Appareil (1) selon la revendication 4, dans lequel les lampes (6a) sont infrarouges ou infrarouges proches.

6. Appareil (1) selon l'une quelconque des revendications précédentes, dans lequel chaque dispositif de transfert (5) des préformes (100) comprend :
- un support commun (15) pour une paire d'organes de préhension (4a, 4b) des préformes (100) qui sont solidaires du support commun (15) sur des parties opposées de sorte qu'un premier organe de préhension (4a) de la paire se trouve en correspondance du premier parcours d'avancement (2) et qu'un deuxième organe de préhension (4b) de la paire se trouve en correspondance du deuxième parcours d'avancement (3) des préformes (100) ;
- des moyens d'actionnement configurés pour faire pivoter ledit support commun (15) de manière à échanger la position des organes de préhension (4a, 4b) de la paire afin que le premier organe de préhension (4a) parvienne au deuxième parcours (3) et que le deuxième organe de préhension (4b) parvienne au premier parcours d'avancement (2) des préformes (100).

7. Appareil (1) selon l'une quelconque des revendications précédentes, dans lequel ledit premier parcours (2) et ledit deuxième parcours (3) comprennent chacun au moins deux sections rectilignes (12, 22, 13, 23) parallèles l'une à l'autre et une section curviligne (32, 33) reliant les deux sections rectilignes (12, 22, 13, 23), les sections rectilignes (12, 22) du premier parcours (2) étant parallèles aux sections rectilignes (13, 23) du deuxième parcours (3) et la section curviligne (32) du premier parcours (2) étant parallèle à la section curviligne (33) du deuxième parcours (3).

8. Appareil (1) selon la revendication 7, dans lequel lesdits moyens de chauffage (6) sont interposés entre l'une des sections rectilignes (12, 22) du premier parcours (2) et l'une des sections rectilignes (13, 23) du deuxième parcours (3).

9. Appareil (1) selon la revendication 7, dans lequel lesdits moyens de chauffage (6) sont interposés entre la section curviligne (32) du premier parcours (2) et la section curviligne (33) du deuxième parcours (3).

10. Appareil (1) selon l'une quelconque des revendications précédentes 1 à 6, dans lequel ledit premier parcours (2) est un arc d'une première circonférence (42) et ledit deuxième parcours (3) est un arc d'une deuxième circonférence (43) ayant un diamètre supérieur à la première circonférence (42) et étant externe et concentrique à ladite première circonférence (42).

11. Appareil (1) selon la revendication 10, dans lequel lesdits moyens de chauffage (6) sont interposés entre l'arc de la première circonférence (42) et l'arc de la deuxième circonférence (43).

12. Appareil (1) selon l'une quelconque des revendications précédentes, dans lequel lesdits organes de préhension (4a, 4b) des préformes (100) sont de plus configurés pour faire tourner les préformes (100) autour d'un axe longitudinal (A-A) de celles-ci pendant leur avancement le long du premier parcours (2) et le long du deuxième parcours (3).

13. Appareil (1) selon l'une quelconque des revendications précédentes, comprenant de plus des parcours d'avancement supplémentaires des préformes (100) comportant une extension externe par rapport au deuxième parcours (3) et étant concentriques et essentiellement parallèles les unes aux autres.

14. Méthode de chauffage de préformes (100), en particulier en matière thermoplastique, comprenant les étapes suivantes :
- faire avancer un premier groupe de préformes (100), l'une après l'autre, le long d'un premier parcours (2) ayant une forme partiellement curviligne et, pendant au moins une section de cet avancement, chauffer les préformes (100) du premier groupe par des moyens de chauffage (6) se prolongeant à l'extérieur dudit premier parcours (2) ;
- à la fin du premier parcours (2), transférer les préformes (100) du premier groupe, l'une après l'autre, du premier parcours (2) à un deuxième parcours (3) étant à l'extérieur et essentiellement parallèle au premier parcours (2), ledit deuxième parcours (3) ayant une forme partiellement curviligne et étant également à l'extérieur desdits moyens de chauffage (6) ;
- faire avancer les préformes (100) du premier groupe, l'une après l'autre, le long du deuxième parcours (3) et, pendant au moins une section de cet avancement, chauffer les préformes (100) du premier groupe par les moyens de chauffage (6).

15. Méthode selon la revendication 14, dans laquelle pendant que les préformes (100) du premier groupe avancent le long du deuxième parcours (3), un deuxième groupe de préformes (100) est chargé sur le premier parcours (2) de sorte que le premier groupe de préformes (100) et le deuxième groupe de préformes (100) avancent, respectivement, parallèlement sur le deuxième parcours (3) et le premier parcours (2), et sont chauffés sur des parties opposées par les moyens de chauffage (6).

16. Méthode selon la revendication 15, dans laquelle lesdits préformes (100) sont saisies et supportées par une pluralité d'organes de préhension (4a, 4b) qui sont solidaires par paires à des supports communs (15) de sorte qu'un premier organe de préhension (4a) de la paire se trouve en correspondance du premier parcours d'avancement (2) et qu'un deuxième organe de préhension (4b) de la paire se trouve en correspondance du deuxième parcours d'avancement (3) des préformes (100), l'étape de transfert des préformes (100) du premier groupe du premier parcours (2) vers le deuxième parcours (3) consistant à faire pivoter les supports communs (15) de manière à échanger la position des organes de préhension (4a, 4b) de la paire pour laquelle le premier organe de préhension (4a) portant une préforme (100) du premier groupe parvient au deuxième parcours (3) et le deuxième organe de préhension (4b) parvient au premier parcours d'avancement (2) des préformes (100) afin d'accueillir une préforme (100) du deuxième groupe.

17. Méthode selon l'une quelconque des revendications 14 à 16, dans laquelle, au cours de l'avancement le long du premier parcours (2) et le long du deuxième parcours (3), les préformes (100) sont pivotées autour d'un axe longitudinal (A-A) de celles-ci.
